# EUROPÄISCHE PATENTSCHRIFT

(11) **EP 1 220 761 B1**
(45) Veröffentlichungstag und Bekanntmachung des Hinweises auf die Patenterteilung: **07.05.2003**
(21) Anmeldenummer: 00966155.4
(22) Anmeldetag: 11.10.2000
(51) Int. Cl.: B60K 17/22, B60K 17/34, F16D 3/12

(54) **GETRIEBEEINHEIT**
DRIVE UNIT
ENSEMBLE BOITE DE VITESSES

(30) Priorität: 16.10.1999 DE 19950047
(43) Veröffentlichungstag der Anmeldung: 10.07.2002
(73) Patentinhaber: ZF FRIEDRICHSHAFEN Aktiengesellschaft, 88038 Friedrichshafen (DE)
(72) Erfinder: HOHER, Markus, 88048 Freidrichshafen (DE)
(86) Internationale Anmeldenummer: EP0009988
(87) Internationale Veröffentlichungsnummer: WO01028801

(56) Entgegenhaltungen:
- WO-A-99/05433
- DE-A- 19 631 236
- US-A- 5 215 161

## Beschreibung

Die vorliegende Erfindung betrifft eine Getriebeeinheit für Kraftfahrzeuge, mit einer Antriebswelle, die mit einem Anfahrelement verbunden ist, mit einem automatischen Getriebe, das mit dem Anfahrelement verbunden ist, mit einer ersten Abtriebswelle, die mit dem Hinterradantrieb des Kraftfahrzeuges verbunden ist, mit einer zweiten Abtriebswelle, die mit dem Vorderradantrieb des Kraftfahrzeuges verbunden ist und mit einem Torsionsdämpfer.

Automatische Getriebe können Stufengetriebe (z. B. 4-, 5-, oder 6-Gang-Getriebe) oder stufenlose bzw. CVT-Getriebe (Continuously Variable Transmission) sein.

Stufenlose Getriebe sind in Form von Umschlingungsgetrieben oder in Form von Reibradgetrieben vielfältig bekannt. So beschreibt die DE 198 44 374.9 der Anmelderin ein CVT in Form eines Kegelscheiben-Umschlingungsgetriebes, das ein erstes Kegelscheibenpaar auf einer Antriebswelle und ein zweites Kegelscheibenpaar auf einer Abtriebswelle aufweist, wobei jedes Kegelscheibenpaar aus einer in axialer Richtung feststehenden ersten Scheibe und aus einer in axialer Richtung verschiebbaren zweiten Kegelscheibe (primärscheiben bzw. Sekundärscheiben) besteht. Zwischen den Kegelscheibenpaaren läuft ein Umschlingungsorgan, z.B. ein Schubgliederband. Die Verstellung der Primärscheibe bzw. Sekundärscheibe erfolgt durch ein Druckmedium mit Hilfe eines elektronischen Steuergerätes, welches über elektromagnetische Stellglieder und hydraulische Ventile das Druckniveau der Stellräume von Primärscheibe und Sekundärscheibe ansteuert.

Ein Reibradgetriebe ist beispielsweise in der WO 99/05433 der Anmelderin beschrieben. Es weist koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher liegt, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist. Die beiden Eingangsscheiben der beiden Getriebeeinheiten sind hierbei drehfest mit einer Drehmomentwelle verbunden, während die beiden Ausgangsscheiben der beiden Getriebeeinheiten, die spiegelsymmetrisch zueinander und nebeneinander im Getriebe angeordnet sind, auf einer gemeinsamen Buchse angeordnet sind, welche drehbar auf der Drehmomentwelle gelagert ist. Die Drehmomentwelle wird von einer Eingangswelle durchsetzt, die mit einem Anfahrelement eines Kraftfahrzeuges, beispielsweise einem Drehmomentwandler oder einer naßlaufenden Anfahrkupplung der Antriebsmaschine des Fahrzeugs verbunden ist.

In der nicht vorveröffentlichten Patentanmeldung DE 199 43 623.1 der Anmelderin ist eine Getriebeeinheit für ein Kraftfahrzeug beschrieben, welche neben dem stufenlosen Getriebe in Form eines Umschlingungsgetriebes oder eines Reibradgetriebes eine Vielzahl von weiteren für den Antrieb eines Fahrzeugs erforderliche Bauteile aufweist und das sowohl als Getriebeeinheit für den Antrieb einer Achse als auch als Getriebeeinheit für den Antrieb zweier Achsen, d. h. der Vorderachse und der Hinterachse eines Kraftfahrzeuges einsetzbar ist. Zu diesem Zweck weist die darin beschriebene Getriebeeinheit ein Gehäuse auf mit einer Antriebswelle, mit einem mit der Antriebswelle verbundenen Anfahrelement, mit einem mit dem Anfahrelement verbundenen stufenlosen Getriebe, mit einem mit dem stufenlosen Getriebe verbundenes Verteilergetriebe, das eine erste Abtriebswelle aufweist, die mit dem Hinterradantrieb verbunden ist und eine zweite Abtriebswelle aufweist, die mit einem Differential für den Vorderradantrieb verbunden ist, wobei mindestens eine der Halbachsen zwischen dem Differential für den Vorderachsantrieb und dem zugehörigen Vorderrad das Gehäuse zwischen Anfahrelement und stufenlosem Getriebe durchsetzt.

Damit die Getriebeeinheit als Allradantrieb für das Fahrzeug eingesetzt werden kann, weist das in das Gehäuse integrierte Verteilergetriebe ein Mittendifferential auf für die Verteilung des Drehmomentes an Hinterachse und Vorderachse des mit dieser Getriebeeinheit versehenen Kraftfahrzeuges. Ferner ist es möglich, das Verteilergetriebe dahingehend auszugestalten, dass das gesamte vom stufenlosen Getriebe abgegebene dem Verteilergetriebe übermittelte Drehmoment ausschließlich den Hinterachsantrieb des Fahrzeugs zugeführt wird und zwar durch Überbrückung der Verbindung zwischen dem Verteilergetriebe und dem Vorderachsdifferential, sodass diese Getriebeeinheit auch ausschließlich für den Antrieb der Hinterachse verwendbar ist.

Diese Ausgestaltung der Getriebeeinheit als Standardgetriebeeinheit oder Allradgetriebeeinheit verringert die Herstellungskosten und damit die Lagerhaltung.

Eine gattungsgemäße, als Allradantrieb eingesetzte Getriebeeinheit ist auch aus der US 5 632 354 bekannt.

Aufgabe der vorliegenden Erfindung ist es, den Bauraum für diese Getriebeeinheit optimal zu nutzen und damit weiter zu verringern.

Ausgehend von einer Getriebeeinheit der eingangs näher genannten Art erfolgt die Lösung dieser Aufgabe mit den im Anspruch 1 angegebenen Merkmalen; vorteilhafte Ausgestaltungen sind in den Unteransprüchen beschrieben.

Erfindungsgemäß wird also vorgesehen, dass eine der vom Differential ausgehenden Halbachsen im motorseitigen Bereich der Getriebeeinheit und, in Fahrtrichtung gesehen, vor dem Anfahrelement quer zur Antriebswelle angeordnet ist und dass der Torsionsdämpfer, in Fahrtrichtung gesehen, vor der Halbachse angeordnet ist.

Mit der erfindungsgemäßen Ausgestaltung der Getriebeeinheit können die Bauteile derart ausgestaltet werden, dass der Bauaufwand unabhängig vom Vorhandensein der quer angeordneten Halbachse unverändert bleibt. Dadurch sind mehreren Gleichteile für verschiedene Getriebeanwendungen, d. h. Standardgetriebe oder Allradgetriebe möglich; der Torsionsdämpfer kann unabhängig vom verwendeten Anfahrelement der Motorisierung leicht angepaßt werden, wodurch ebenfalls mehr Gleichteile verwendbar sind.

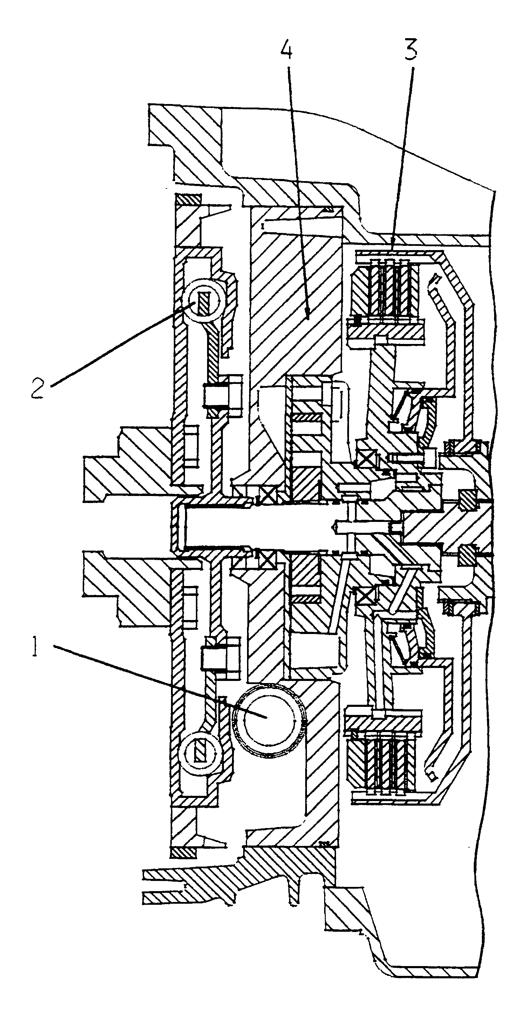

Im folgenden wird die Erfindung anhand der Zeichnung näher erläutert, in der ein Teilschnitt durch eine erfindungsgemäß ausgestaltete Getriebeeinheit dargestellt ist.

In der einzigen Figur sind die wesentlichen in einem (nicht näher dargestellten) Gehäuse zusammengefaßten, d. h. integrierten, Bauteile für eine erfindungsgemäß Getriebeeinheit dargestellt. Diese Getriebeeinheit weist also eine Antriebswelle auf, die mit einem Anfahrelement verbunden ist sowie ein automatisches Getriebe, das mit dem Anfahrelement verbunden ist, eine erste Abtriebswelle, die mit dem Hinterradantrieb des Kraftfahrzeuges verbunden ist, eine zweite Abtriebswelle, die mit dem Vorderradantrieb des Kraftfahrzeuges verbunden ist sowie einen Torsionsdämpfer. Das Anfahrelement ist eine Anfahrkupplung oder ein Drehmomentwandler und das stufenlose Getriebe ist entweder ein Umschlingungsgetriebe oder ein Reibradgetriebe, wie es in den eingangs näher erläuterten Patentanmeldungen näher beschrieben ist.

Erfindungsgemäß ist bei der Getriebeeinheit vorgesehen, dass eine der vom Differential ausgehenden Halbachsen 1 im motorseitigen Bereich der Getriebeeinheit und, in Fahrtrichtung gesehen, vor dem Anfahrelement 3 quer zur Antriebswelle angeordnet ist, wobei der Torsionsdämpfer 2, in Fahrtrichtung gesehen, vor der Halbachse 1 angeordnet ist.

Das Anfahrelement 3 kann als nasse Anfahrkupplung oder als Drehmomentwandler ausgebildet sein und ist zur optimalen Bauraumausnutzung in Fahrtrichtung gesehen nach der quer angeordneten zweiten Abtriebswelle 1 eingebaut. Dem Anfahrelement 3 ist eine Ölversorgung mit Pumpe 4 zugeordnet, die in Fahrtrichtung gesehen vor dem Anfahrelement 3 oder nach dem Anfahrelement 3 vorgesehen sein kann. Im dargestellten Ausführungsbeispiel ist die Ölversorgung 4 vor dem Anfahrelement, das als nasse Anfahrkupplung ausgebildet ist, angeordnet.

Wie weiter oben ausgeführt, wird insbesondere durch die Anordnung einer der vom Differential ausgehenden Halbachsen 1 zwischen dem Torsionsdämpfer 2 und dem Anfahrelement 3 eine optimale Bauraumausnutzung erzielt, sodass dieser weiter verringert werden kann.

Der Torsionsdämpfer 2 kann unabhängig vom verwendeten Anfahrelement 3 der Motorisierung des Kraftfahrzeuges angepaßt werden. Ferner kann eine "Flexplate" als flexible Verbindungsplatte zwischen Kurbelwellenflansch und Wandlerflansch in den Torsionsdämpfer 2 integriert werden.

### Bezugszeichenliste

- 1: Halbachse
- 2: Torsionsdämpfer
- 3: Anfahrelement
- 4: Ölversorgung

## Patentansprüche

1. Getriebeeinheit für Kraftfahrzeuge, mit einer Antriebswelle, die mit einem Anfahrelement verbunden ist und mit einem automatischen Getriebe, das mit dem Anfahrelement verbunden ist, mit einer ersten Abtriebswelle, die mit dem Hinterradantrieb des Kraftfahrzeuges verbunden ist, mit einer zweiten Abtriebswelle, die mit einem Differential für den Vorderradantrieb des Kraftfahrzeuges verbunden ist und mit einem Torsionsdämpfer, **dadurch gekennzeichnet, dass** eine der vom Differential ausgehenden Halbachsen (1) im motorseitigen Bereich der Getriebeeinheit und, in Fahrtrichtung gesehen, vor dem Anfahrelement (3) quer zur Antriebswelle angeordnet ist und dass der Torsionsdämpfer (2), in Fahrtrichtung gesehen, vor der Halbachse (1) angeordnet ist.

2. Getriebeeinheit nach Anspruch 1, **dadurch gekennzeichnet, dass** das Anfahrlement (3) eine nasse Anfahrkupplung ist.

3. Getriebeeinheit nach Anspruch 1, **dadurch gekennzeichnet, dass** das Anfahrlement (3) ein Drehmomentwandler ist.

4. Getriebeeinheit nach einem der Ansprüche 1 bis 3, **dadurch gekennzeichnet, dass** dem Anfahrelement (3) eine Ölversorgung (4) zugeordnet ist.

5. Getriebeeinheit nach Anspruch 4, **dadurch gekennzeichnet, dass** die Ölversorgung (4) auf der dem Torsionsdämpfer (2) zugewandten Seite des Anfahrelements (3) angeordnet ist.

6. Getriebeeinheit nach Anspruch 4, **dadurch gekennzeichnet, dass** die Ölversorgung (4) auf der dem Torsionsdämpfer (2) abgewandten Seite des Anfahrelements (3) angeordnet ist.

7. Getriebeeinheit nach einem der vorhergehenden Ansprüche, **dadurch gekennzeichnet, dass** das automatische Getriebe ein CVT-Getriebe ist.

8. Getriebeeinheit nach Anspruch 7, **dadurch gekennzeichnet, dass** das automatische Getriebe ein Reibradgetriebe ist.

9. Getriebeeinheit nach einem der Ansprüche 1 bis 6, **dadurch gekennzeichnet, dass** das automatische Getriebe ein Stufengetriebe ist.

## Claims

1. Transmission unit for motor vehicles, with a drive shaft linked to a starter element and an automatic transmission linked to the starter element, having a first output shaft linked to the rear wheel drive of the motor vehicle, a second output shaft linked to a differential transmission unit for the front wheel drive of the motor vehicle and a torsion damper, **characterised in that** one of the half-axles (1) extending from the differential transmission unit in the engine-side region of the transmission unit is disposed in front of the starter unit (3), as viewed in the direction of travel, and transversely to the drive shaft, and the torsion damper (2) is disposed in front of the half-axle (1) as viewed in the direction of travel.

2. Transmission unit as claimed in claim 1, **characterised in that** the starter unit (3) is a wet starting clutch.

3. Transmission unit as claimed in claim 1, **characterised in that** the starting clutch (3) is a torque converter.

4. Transmission unit as claimed in one of claims 1 to 3, **characterised in that** an oil supply (4) is assigned to the starter element (3).

5. Transmission unit as claimed in claim 4, **characterised in that** the oil supply (4) is disposed on the side of the starter element (3) directed towards the torsion damper (2).

6. Transmission unit as claimed in claim 4, **characterised in that** the oil supply (4) is disposed on the side of the starter element (3) remote from the torsion damper (2).

7. Transmission unit as claimed in one of the preceding claims, **characterised in that** the automatic transmission is a CVT transmission.

8. Transmission unit as claimed in claim 7, **characterised in that** the automatic transmission is a friction wheel drive.

9. Transmission unit as claimed in one of claims 1 to 6, **characterised in that** the automatic transmission is a variable speed transmission.

## Revendications

1. Unité de transmission pour véhicules automobiles, comprenant un arbre d'entrée, qui est relié à un élément de démarrage, et une transmission automatique qui est reliée à l'élément de démarrage, un premier arbre de sortie qui est relié à l'entraînement des roues arrière du véhicule automobile, un deuxième arbre de sortie, qui est relié à un différentiel prévu pour l'entraînement des roues avant du véhicule automobile, et un amortisseur de torsion, **caractérisée en ce qu'**un des demi-arbres (1) partant du différentiel est disposé dans la région côté moteur de l'unité de transmission, en avant de l'élément de démarrage (3), vu dans le sens de la marche, et transversalement à l'arbre d'entrée, et **en ce que** l'amortisseur de torsion (2) est disposé en avant du demi-arbre (1), vu dans le sens de la marche.

2. Unité de transmission selon la revendication 1, **caractérisée en ce que** l'élément de démarrage (3) est un embrayage de démarrage travaillant dans un liquide.

3. Unité de transmission selon la revendication 1, **caractérisée en ce que** l'élément de démarrage (3) est un convertisseur de couple.

4. Unité de transmission selon l'une des revendications 1 à 3, **caractérisée en ce qu'**une alimentation en huile (4) est associée à l'élément de démarrage (3).

5. Unité de transmission selon la revendication 4, **caractérisée en ce que** l'alimentation en huile (4) est disposée sur le côté de l'élément de démarrage (3) qui est dirigé vers l'amortisseur de torsion (2).

6. Unité de transmission selon la revendication 4, **caractérisée en ce que** l'alimentation en huile (4) est disposée sur le côté de l'élément de démarrage (3) qui est à l'opposé de l'amortisseur de torsion (2).

7. Unité de transmission selon l'une des revendications précédentes, **caractérisée en ce que** la transmission automatique est une transmission CVT (variable en continu).

8. Unité de transmission selon la revendication 7, **caractérisée en ce que** la transmission automatique est une transmission à roues de friction.

9. Unité de transmission selon l'une des revendications 1 à 6, **caractérisée en ce que** la transmission automatique est une transmission à rapports étagés.
